Europäisches Patentamt

**European Patent Office**

Office européen des brevets

(11) Numéro de publication: **0 055 649**
**B1**

(12) **FASCICULE DE BREVET EUROPEEN**

(45) Date de publication du fascicule du brevet:
14.03.84

(21) Numéro de dépôt: **81401965.9**

(22) Date de dépôt: **09.12.81**

(51) Int. Cl.³: **F 16 C 1/22**, F 16 D 13/75

(54) Commande mécanique par câble coulissant axialement dans une gaine flexible.

(30) Priorité: **11.12.80 FR 8026284**

(43) Date de publication de la demande:
**07.07.82 Bulletin 82/27**

(45) Mention de la délivrance du brevet:
**14.03.84 Bulletin 84/11**

(84) Etats contractants désignés:
**DE FR GB IT**

(56) Documents cités:
**EP - A - 0 030 494**
**FR - A - 449 157**
**FR - A - 2 375 489**
**US - A - 3 587 341**

(73) Titulaire: **SOCIETE ANONYME D.B.A., Centre Paris Pleyel, F-93521 St-Denis Cédex 01 (FR)**

(72) Inventeur: **Deligny, Jean, 16 rue d'Alicante, F-72000 Le Mans (FR)**

(74) Mandataire: **Poidatz, Emmanuel et al, Service Brevets Bendix 44 rue François 1er, F-75008 Paris (FR)**

BUNDESDRUCKEREI BERLIN

Commande mécanique par câble coulissant axialement dans une gaine flexible

La présente invention a pour objet une commande mécanique par câble coulissant axialement dans une gaine flexible munie d'un dispositif de réglage automatique, telle que celle décrite dans FR-A-449 157.

L'invention vise plus particulièrement les commandes mécaniques par câble appliquées à la commande d'un embrayage à friction pour véhicule automobile ou la commande d'un frein à tambour ou à disque pour véhicule automobile. Lorsqu'un tel type de commande est utilisé notamment dans le cas d'un embrayage à friction, l'usure des garnitures de friction de l'embrayage résultant des engagements et désengagements successifs de l'embrayage, provoque l'apparition de jeux croissants entre les divers éléments de l'embrayage. Si aucun dispositif de rattrapage des jeux n'est prévu, la position de repos de la pédale d'actionnement de l'embrayage varie graduellement jusqu'à atteindrei une position finale correspondant à l'usure maximum des garnitures de friction, dans laquelle la pédale est remontée de plusieurs centimètres par rapport à sa position initiale de repos correspondant à des garnitures de friction neuves. On constate également, après l'installation d'une telle commande sur un véhicule et après un court temps d'utilisation que le câble tend à s'allonger sous l'effet des efforts de traction qui lui sont appliqués, la gaine tendant elle à se raccourcir sous l'effet des efforts de compression qui lui sont appliqués en réaction. Cet allongement du câble et ce raccourcissement de la gaine s'ajoutent et provoquent également l'apparition de jeux parasites dans la commande qui sont nuisibles au fonctionnement correct de cette commande.

La demande de brevet européen No. 0 030 494 A1 publiée le 17 juin 1981 représente et décrit une commande mécanique par câble, munie d'un dispositif de rattrapage automatique des jeux monté à l'une des extrémités de la gaine. Ce dispositif comporte un système de liaison débrayable à coincement par billes disposé entre une extrémité de la gaine et un support fixe lié au châssis du véhicule. Le dispositif proposé effectue de manière très satisfaisante le rattrapage automatique de tous les jeux pouvant apparaître dans la commande mais présente l'inconvénient de devoir être installé sur une partie fixe du véhicule, cette référence fixe étant nécessaire pour commander le déverrouillage de la liaison débrayable à coincement par billes, lorsque la pédale est dans sa position normale de repos.

La présente invention a pour but de réaliser une commande mécanique par câble munie d'un dispositif de réglage automatique pouvant rattraper tous les jeux apparaissant dans la commande et qui permette de s'affranchir d'une référence fixe au châssis du véhicule sur lequel elle est installée.

Dans ce but, l'invention propose une commande mécanique par câble coulissant axialement dans une gaine flexible équipée d'un dispositif de réglage automatique pour faire varier la longueur de la gaine en fonction des jeux apparaissant dans la commande et dont une extrémité est reliée à un organe récepteur muni de moyens de rappel élastique, ledit dispositif de réglage comprenant deux prolongements de gaine télescopiques insérés entre deux portions consécutives de la gaine auxquelles ils sont fixés et caractérisé en ce que ledit dispositif comprend un organe de verrouillage par coincement disposé entre les deux prolongements de gaine pour solidariser ces derniers par coincement lors de l'actionnement de la commande mécanique, et un organe de commande fixé à l'organe de verrouillage et relié au câble au moyen d'une liaison par frottement, ledit organe de commande étant entraîné lors de l'actionnement de la commande en translation axiale par le câble dans le sens correspondant au coincement de l'organe de verrouillage jusqu'à ce que les prolongements de gaine soient solidarisés, ledit organe de commande étant entraîné en translation axiale par le câble coulissant dans le sens correspondant au déverrouillage lorsque l'effort de rappel appliqué au câble coulissant devient inférieur à une valeur prédéterminée.

L'invention sera maintenant décrite en se référant aux dessins annexés dans lesquels:

— la figure 1 représente une commande mécanique par câble munie d'un dispositif de réglage automatique selon l'invention, appliquée à la commande d'un embrayage à friction de véhicule automobile;

— la figure 2 est une vue en coupe axiale du dispositif de réglage automatique réalisé selon la présente invention;

— la figure 3 est une vue de détail de l'organe de verrouillage du dispositif de réglage automatique représenté à la figure 2;

— la figure 4 est une vue en coupe de l'organe de verrouillage selon la ligne 4-4 de la figure 3; et

— la figure 5 est une vue en coupe selon la ligne 5-5 de la figure 3.

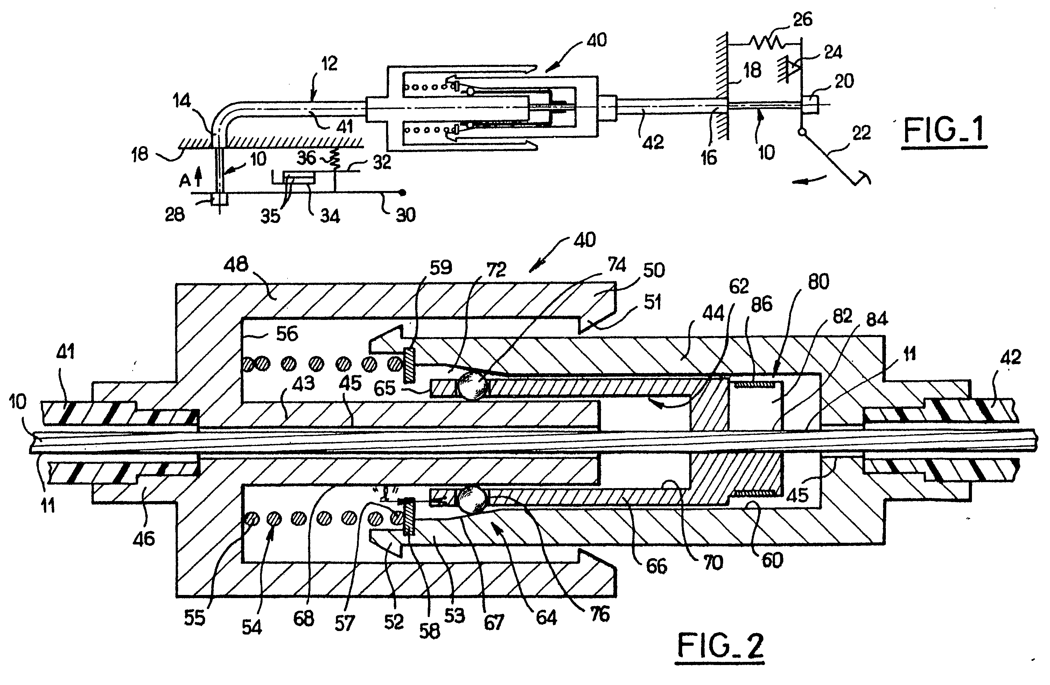

La commande mécanique représentée à la figure 1 comporte un câble 10 monté coulissant axialement dans une gaine cylindrique flexible du type »bowden« 12 dont les extrémités 14 et 16 sont ancrées à un bâti fixe 18 constitué par exemple par le châssis d'un véhicule automobile. La première extrémité 20 du câble 10 est fixée à un organe d'actionnement 22 constitué dans l'exemple représenté par une pédale 22 montée pivotante par rapport au bâti 18. La pédale 22 est rappelée vers sa position de repos en appui sur une butée fixe 24 par un ressort de rappel de pédale 26. La seconde extrémité 28 du câble 10 est fixée à un organe récepteur constitué dans l'exemple représenté par une fourchette 30 de commande d'embrayage à friction. La fourchette 30 est montée pivotante par rapport au bâti 18 et est reliée à un disque d'embrayage 32. Le disque d'embrayage 32 est normalement maintenu en contact avec un plateau d'embrayage 34 par rapport au bâti 18 et est reliée à un disque d'embrayage 32. Le disque d'embrayage 32 est normalement maintenu en contact avec un plateau d'embrayage 34 par des ressorts d'embrayage 36 prenant appui sur le bâti 18. Le disque 32 et le plateau 34 sont tous deux munis de garnitures de friction 35.

La commande mécanique représentée à la figure 1 comporte en outre un dispositif de réglage automatique 40 inséré entre deux portions consécutives 41 et 42 de la gaine flexible 12.

Lorsque l'opérateur actionne la pédale 22 et fait pivoter cette dernière, il provoque un déplacement axial du câble 10 par rapport à la gaine 12 dans la direction indiquée par la flèche A; le déplacement axial du câble 10 provoque le pivotement de la fourchette d'embrayage 30 qui entraine avec elle le disque d'embrayage 32 en éloignement du plateau 34, tout en comprimant les ressorts d'embrayage 36, pour provoquer le débrayage.

On décrira maintenant plus en détail le dispositif de réglage automatique 40 en se référant aux figures 2 à 5. Le dispositif 40 comprend deux prolongements de gaine 43 et 44 fixés aux extrémités des deux portions consécutives de gaine 41 et 42, respectivement. Le prolongement de gaine 43 est reçu télescopiquement dans le prolongement 44 pour constituer un dispositif à longueur variable permettant de régler automatiquement la longueur de la gaine 12 en fonction des jeux pouvant apparaître dans la commande. Le prolongement de gaine 43 est constitué par une pièce de forme tubulaire, qui est fixée par son extrémité 46 à l'extrémité de la portion de gaine 41 et est montée coaxiale à cette dernière. Le prolongement 44 est également constitué par une pièce de forme tubulaire fixée à la seconde portion de gaine 42 d'une manière identique. Le câble 10 peut coulisser librement dans les alésages internes 45 et 46 des prolongements de gaine 43 et 44. Le prolongement de gaine 43 est muni d'une virole de protection 48 venue de matière avec le prolongement 43 et coaxiale à ce dernier. L'extrémité 50 de la virole de protection 48 est muni d'un épaulement annulaire en forme de crochet 51 susceptible de coopérer avec un épaulement similaire 52 prévu à l'extrémité 53 du prolongement de gaine 44 pour définir un dispositif de fermeture du boîtier constitué par les deux prolongements de gaine 43 et 44; les épaulements 51 et 52 ont en outre pour fonction de limiter le déplacement axial relatif des prolongements 43 et 44 d'une façon qui sera décrite plus loin.

Le dispositif de réglage automatique 40 comprend également un ressort de réglage 54 disposé entre les deux portions consécutives de la gaine. Le ressort de réglage 54 est constitué dans l'exemple représenté par un ressort hélicoïdal de compression disposé entre le prolongement 43 et le prolongement 44. L'extrémité 55 du ressort 54 prend appui sur la paroi interne 56 du prolongement 43. La second extrémité 57 du ressort hélicoïdal 54 prend appui sur une rondelle 58 montée dans une gorge radiale 59 formée dans l'alésage interne de grand diamètre 60 formé dans le prolongement de gaine 44. Le ressort de compression 54 ainsi disposé sollicite les prolongements de gaine 43 et 44 en éloignement l'un de l'autre dans la direction correspondant à un allongement de la gaine 12.

Dans un deuxième mode de réalisation de l'invention, non illustré dans les figures, le ressort de réglage 54 est disposé à l'extérieur du dispositif de réglage. Le ressort 54 est dans ce cas disposé concentriquement à la portion de gaine 41 à l'extérieur de cette dernière. Le ressort 54 prend alors appui d'une part sur un épaulement fixé à la gaine 41 et d'autre part sur un épaulement radial externe fixé au prolongement de gaine 44. Ce deuxième mode de réalisation permet de réduire la longueur hors-tout du dispositif de réglage et de monter un ressort de réglage de plus grande longueur.

Le dispositif de réglage 40 comporte en outre un organe de verrouillage 62 prévu pour solidariser les prolongements de gaine 43 et 44 lors de l'actionnement de la commande mécanique. L'organe de verrouillage 62 est muni d'un système à coincement par billes 64. Ce système comprend un manchon cylindrique 66 monté coulissant axialement dans l'alésage interne de grand diamètre 60 du prolongement de gaine 44. Une portée d'appui tonconique 67 est formée dans l'alésage interne 60 du prolongement 44. La surface cylindrique externe 68 du prolongement de gaine de forme tubulaire 43 est reçue en coulissement dans un alésage interne 70 formé dans le manchon cylindrique 66. La surface externe cylindrique 68 définit une portée d'appui cylindrique qui coopère avec la surface de portée tronconique 67 pour former entre elles un logement 72 dans lequel sont reçues des billes 74. Les billes 74 sont réparties circulairement et sont disposées dans des alésages radiaux 76 formés dans le manchon 66; le manchon 66 constituant une cage pour les billes 74 qui sont montées libres dans les alésages 76.

L'organe de verrouillage 62 est commandé par un organe de commande, représenté de manière schématique à la figure 2 et désigné par la référence générale 80. L'organe de commande 80 est constitué par une pince élastique fendue 82 dans laquelle est formé un alésage interne cylindrique 84 dans lequel le câble 10 est reçu en coulissement, l'alésage 84 coopérant avec la surface cylindrique externe 11 du câble 10. Dans l'exemple représenté, la pince élastique 84 est venue de matière avec l'organe de verrouillage 62 qui est réalisé dans un matériau souple. La pince élastique fendue 84 est comprimée et maintenue serrée sur le câble 10 au moyen d'un élément formant ressort 86. On comprend qu'ainsi l'organe de commande 82 est relié au câble 10 par une liaison par frottement résultant du contact entre la paroi interne de l'alésage et la surface externe 11 du câble 10.

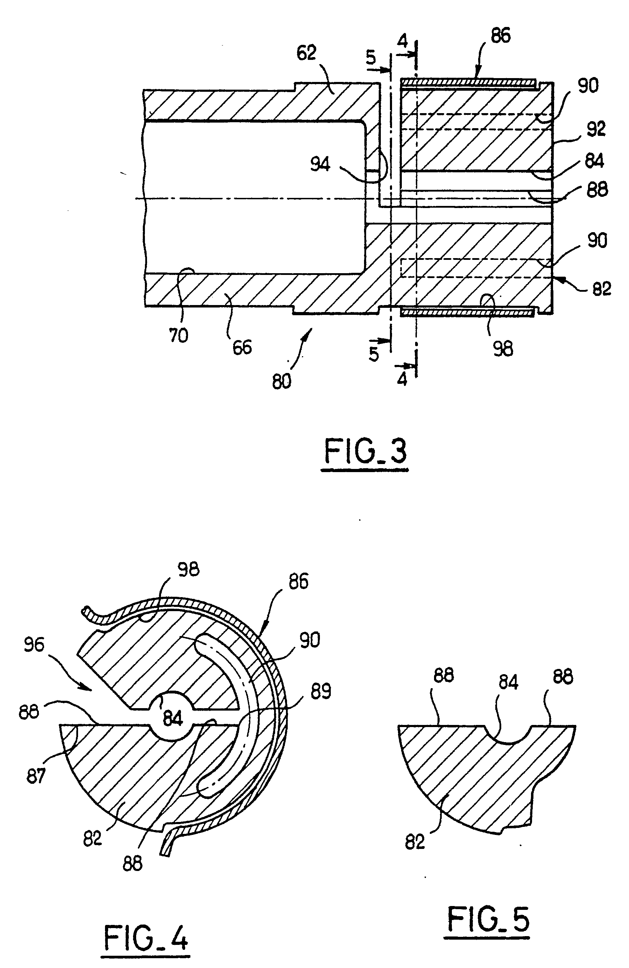

On décrira maintenant plus en détail l'organe de commande 80 en se référant aux figures 3 à 5. Les figures 3 à 5 représentent la portion extrême de l'organe de verrouillage 62 constituant l'organe de commande 80. L'organe de verrouillage 80 est représenté indépendamment des autres éléments de la commande et notamment du câble 10. L'organe 80 comprend une pince élastique fendue 82 comportant un corps de forme générale cylindrique. Afin de posséder une bonne élasticité, le corps cylindrique 82 est fendu de la manière suivante: il comporte une première fente axiale transversale 88 s'étendant sensiblement le long d'un diamètre du corps 82 et se terminant à sa première extrémité 89 par une fente en forme de couronne circulaire 90 s'étendant selon environ un tiers de circonférence, et s'étendant axialement depuis l'extrémité 92 du corps cylindrique 82 jusqu'à une fente transversale radiale 94 s'étendant dans environ la moitié du bloc cylindrique 82. La fente 88 s'évase à proximité de sa seconde extrémité 87 pour former un dégagement en forme de secteur circulaire 96 s'étendant transversalement sur une longueur identique à la fente en forme de couronne 90. L'organe de commande 80 comporte finalement un ressort 86 constitué par un clips réalisé en tôle et qui présente sensiblement la forme d'une bague incomplète. Le ressort 86 est monté dans une gorge radiale externe 98 du bloc élastique 82. Le ressort 86 est monté serré sur la gorge 98 pour appliquer au bloc 82 une contrainte élastique provoquant le pincement du câble 10 dans l'alésage interne 84 du bloc 82. Dans le mode de réalisation représenté, l'ensemble de l'organe de verrouillage 62 comprenant notamment l'organe de commande 80 est réalisé en matériau thermoplastique connu sous le nom de »Delrin« et coopère avec la surface externe 11 du câble 10 qui est généralement constituée par un guidage réalisé en polyéthylène ou polyamide.

On décrira maintenant le fonctionnement du dispositif automatique de réglage monté sur la commande mécanique. Lorsque l'opérateur actionne la commande, par exemple en agissant sur la pédale 22, il provoque un déplacement axial du câble 10 par rapport à la gaine 12; lors de ce déplacement, le câble entraîne par friction l'organe de commande 80 qui est fixé rigidement à l'organe de verrouillage 62. On comprend qu'ainsi, dès que l'opérateur agit sur le câble 10, l'organe de verrouillage 62 se déplace vers la droite, en considérant la figure 2, et provoque un coincement des billes 74 entre les surfaces de portée d'appui 67 et 67 qui occupent alors la position représentée à la figure 2.

Dès que les billes 74 sont coincées entre les surfaces d'appui l'organe de verrouillage solidarise les prolongements de gaine 43 et 44 pour constituer une gaine de longueur constante se comportant comme une gaine de câble classique. Tout effort appliqué au câble 10 est appliqué par réaction à la gaine 12 et donc par conséquent aux prolongements de gaine 43 et 44 qui sont soumis à des efforts agissant dans le sens correspondant au raccourcissement de la gaine. Ces efforts amplifient le coincement des billes 74 entre les deux prolongements de gaine, et immobilisent les deux prolongements dans leur position axiale relative ainsi que l'organe de verrouillage 62 par rapport aux deux prolongements. Dès cet instant tout déplacement supplémentaire du câble 10 vers la droite provoque un glissement du câble par rapport à l'organe 80, c'est-à-dire que l'organe de commande 80 n'est plus entraîné par frottement, les efforts de coincement exercés sur les billes étant supérieurs à l'effort de frottement exercé par le câble 10 sur l'organe de commande 80. L'opérateur peut donc commander le débrayage de l'embrayage 30 en toute sécurité, la commande mécanique se comportant comme une commande mécanique d'un type classique dans lequel la gaine est ininterrompue.

Lorsque l'opérateur relâche l'effort appliqué à la pédale 22 le câble est soumis par les ressorts de rappel de l'embrayage 30 à un effort de rappel provoquant son déplacement axial vers la gauche. L'effort appliqué au câble 10 par les ressorts de rappel 36 est également transmis par réaction à la gaine en deux parties et par conséquent aux prolongements de gaine 43 et 44. D'une façon identique à ce qui a été décrit plus haut, ces efforts de réaction transmis au prolongements 43 et 44 amplifient le coincement des billes 74 entre les deux prolongements et immobilisent ces deux éléments l'un par rapport à l'autre ainsi que l'organe de verrouillage 62 par rapport aux deux prolongements. Durant la phase de rappel du câble, ce dernier glisse par rapport à l'organe de commande 80 de l'organe de verrouillage 62. Ce glissement continue jusqu'à ce que l'embrayage approche de la position embrayée. Lors de cette approche l'effort de rappel appliqué au câble, et par réaction à la gaine, diminue progressivement jusqu'à ce que l'embrayage soit dans la position embrayée, position dans laquelle les efforts appliqués à la gaine et au câble sont nuls. On comprendra que lors de sa diminution, l'effort appliqué au câble passe par une valeur prédéterminée correspondant à l'effort limite de glissement du câble 10 par rapport à l'organe de commande 80; en dessous de cette valeur prédéterminée, le câble peut à nouveau entraîner l'organe de commande par frottement et par conséquent provoquer le déplacement de l'organe de verrouillage 62 vers la gauche.

Le déplacement de l'organe de verrouillage 62 vers la gauche provoque le décoincement des billes 74 et le déverrouillage des prolongements de gaine, l'effort de coincement appliqué aux billes ayant diminué progressivement à mesure que l'effort de rappel appliqué au câble diminuait. Le déplacement de l'organe de verrouillage vers la gauche est limité par la rondelle 58 contre laquelle l'extrémité libre 65 du manchon cylindrique 66 vient buter. La course de l'organe de verrouillage 62 par rapport au prolongement 44 est aussi limitée à une valeur »1« nécessaire au déverrouillage de l'organe 62.

Dans la position de repos de la commande, les deux prolongements 43 et 44 peuvent coulisser librement l'un par rapport à l'autre de manière télescopique pour permettre, notamment sous l'action du ressort hélicoïdal 54, un rattrapage automatique de la longueur de la gaine 10, c'est-à-dire un rattrapage automatique de tous les jeux pouvant apparaître dans la commande. On comprend qu'ainsi la commande mécanique munie du dispositif de réglage automatique 40 constitue un câble »auto-régleur« pouvant compenser tous les jeux apparaissant dans la commande mécanique et pouvant s'installer sur n'importe quel véhicule en lieu et place d'un câble de commande classique et ce sans aucune adaptation ni du véhicule ni des moyens de fixation classiques du câble telles que des butées ou embouts de câble. Cet avantage est prépondérant notamment pour l'installation des câbles sur les véhicules modernes dans lesquels les contraintes d'encombrement sont parmi les plus importantes. On comprend de plus que le montage d'un tel câble auto-régleur assure toute fiabilité quant à un fonctionnement correct de l'organe récepteur qui lui est associé et ce dès le montage du câble sur le véhicule, plus aucun réglage ni aucune adaptation n'étant nécessaires. Notamment la position de repos de l'organe d'actionnement constitué par une pédale est maintenue de manière constante au cours du temps. Le dispositif de réglage automatique proposé permet en outre d'être adapté pour n'importe quelle longueur de câble, le fabricant de ce dernier n'ayant qu'à modifier la longueur des deux portions de gaine entre lesquelles le dispositif est inséré pour s'adapter à la demande des différents utilisateurs.

La commande mécanique muni de son dispositif de réglage étant d'autre part du type dans lequel le câble n'est pas interrompu, elle présente toutes les conditions de fiabilité et de sécurité souhaitable notamment en cas d'une défectuosité éventuelle du dispositif de réglage. En effet, en cas de mauvais fonctionnement, par exemple du dispositif à coincement par billes, le conducteur pourra néanmoins actionner la commande d'embrayage, les deux prolongements de gaine 43 et 44 venant alors en butée l'un dans l'autre, c'est-à-dire l'extrémité 52 du prolongement 44 venant prendre appui sur la paroi interne 56 du prolongement 43 pour former à nouveau une gaine de longueur constante, le mauvais fonctionnement du dispositif de réglage pouvant alors être détecté par le conducteur qui constatera une course morte importante de sa pédale avant le débrayage. La structure du prolongement 43 munie de la virole 48 coopérant avec le prolongement 44 définir un boîtier dont l'étanchéité est assurée par la coopération des épaulements 51 et 52 qui définissent une chicane pour empêcher l'entrée des impuretés dans le système. Les épaulements 51 et 52 permettent également d'assurer l'assemblage du dispositif de réglage proprement dit par simple emboîtement élastique du prolongement 44 dans le prolongement 43 pour éviter l'ouverture intempestive du dispositif de réglage lors de l'installation du câble sur un véhicule.

L'invention n'est pas limitée au mode de réalisation qui vient d'être décrit. De nombreuses variantes sont possibles notamment en ce qui concerne les différents matériaux utilisés pour l'organe de commande 80 et le guidage du câble 11 de façon à assurer un coefficient de frottement correct entre ces deux éléments. L'organe de commande peut être remplacé par une pince du type analogue aux mandrins d'outillage venant pincer le câble jusqu'à ce qu'une valeur prédéterminée de l'effort appliqué au câble ouvre cette pince. De même l'organe de verrouillage 62 peut être d'un type différent mais agissant toujours par coincement pour solidariser les deux pièces 43 et 44, l'effort de coincement devant toujours être proportionnel aux efforts appliqués au câble et par réaction à la gaine.

## Revendications

1. Commande mécanique par câble (10) coulissant axialement dans une gaine flexible (12), équipée d'un dispositif de réglage automatique (40) pour faire varier la longueur de la gaine en fonction des jeux apparaissant dans la commande, et dont une extrémité (28) est reliée à un organe récepteur (30) muni de moyens de rappel élastiques (36), ledit dispositif de réglage comprenant deux prolongements de gaine (43, 44) télescopiques insérés entre deux portions consécutives (41, 42) de la gaine auxquelles ils sont fixés, caractérisé en ce que ledit dispositif comprend un organe de verrouillage par coincement (62) disposé entre les deux prolongements de gaine (43, 44) pour solidariser ces derniers parcoincement lors de l'actionnement de la commande mécanique, et un organe de commande (80) fixé à l'organe de verrouillage (62) et relié au câble (10) au moyen d'une liaison par frottement (84, 11), ledit organe de commande (80) étant entraîné, lors de l'actionnement de la commande, en translation axiale par le câble (10) dans le sens correspondant aucoincement de l'organe de verrouillage jusqu'à ce que les prolongements de gaine (43, 44) soient solidarisés, ledit organe de commande étant entraîné en translation axiale par le câble coulissant dans le sens correspondant au déverrouillage lorsque l'effort de rappel appliqué au câble coulissant devient inférieur à une valeur prédéterminée.

2. Commande mécanique selon la revendication 1, caractérisée en ce que lesdits prolongements de gaine (43, 44) sont constitués de deux pièces de forme tubulaire reçues télescopiquement l'une dans l'autre et entre lesquelles est reçu ledit organe de verrouillage parcoincement (62).

3. Commande mécanique selon la revendication 2, caractérisée en ce que ledit dispositif de verrouillage (62) comprend un manchon cylindrique (66) coaxial auxdits prolongements de gaine tubulaires (43, 44), des billes (74) montées libres dans des alésages radiaux (76) formés dans le manchon (66) pour coopérer avec des surfaces de portée d'appui (67, 68) prévues sur lesdits prolongements de gaine lors de l'actionnement de la commande mécanique.

4. Commande mécanique selon la revendication 3, caractérisée en ce que lesdites surfaces de portées d'appui comprennent une surface de portée d'appui cylindrique (68) formée sur l'un desdits prolongements de gaine (43) et une surface de portée d'appui conique (67) formée sur l'autre desdits prolongements (44) en vis-à-vis de la surface de portée cylindrique lesdites surfaces (64, 67) coopérant entre elles pour définir un logement (75) dans lequel sont reçues lesdites billes (74).

5. Commande mécanique selon l'une quelconque des revendications 1 à 4, caractérisée en ce que ledit organe de commande est constitué par une pince élastique comprenant un corps (82) réalisé en matériau souple muni d'un alésage (84) dans lequel le câble (10) est reçu en coulissement, et un ressort (86) comprimant ledit corps de façon à maintenir la paroi interne de l'alésage (84) en contact avec la surface externe (11) du câble (10) et définir ainsi ladite liaison par frottement.

6. Commande mécanique selon l'une quelconque des revendications 1 à 5, caractérisée en ce que ledit dispositif de réglage (40) comprend un ressort de réglage (54) disposé entre les deux portions consécutives de la gaine (41, 42) pour solliciter ces derniers en éloignement l'un de l'autre, c'est-à-dire dans la direction correspondant à l'allongement de la gaine.

**Patentansprüche**

1. Mechanische Steuerung mittels eines Kabels (10), das in einer flexiblen Hülle (12) axial gleitend mit einer selbsttätigen Ausgleichsvorrichtung (40) versehen ist, um die Länge der Hülle in Abhängigkeit von in der Steuerung auftretendem Spiel zu ändern, und deren ein Ende (28) mit einem Empfänger (30) verbunden ist, der mit elastischen Rückholmitteln (36) versehen ist, wobei die Ausgleichsvorrichtung zwei teleskopierbare Hüllenansätze (43, 44) aufweist, die zwischen zwei aufeinanderfolgende Abschnitte (41, 42) der Hülle, an denen sie befestigt sind, eingesetzt sind, dadurch gekennzeichnet, daß die Ausgleichsvorrichtung ein mit Klemmwirkung arbeitendes Verriegelungsorgan (62), das zwischen den beiden Hüllenansätzen (43, 44) angeordnet ist, um die letzteren bei einer Betätigung der mechanischen Steuerung miteinander zu vereinigen, sowie ein Steuerorgan (80) aufweist, das am Verriegelungsorgan (62) befestigt ist und am Kabel (10) durch eine Reibschlußverbindung (84, 11) festgelegt ist, wobei das Steuerorgan (80) bei einer Betätigung der Steuerung translationsförmig in Axialrichtung von dem Kabel (10) in einem Richtungssinn entsprechend einer Klemmung des Verriegelungsorganes mitgenommen wird, bis die Hüllenansätze (43, 44) miteinander verbunden sind, wobei das Steuerorgan translationsförmig in Axialrichtung von dem gleitenden Kabel in Entriegelungsrichtung mitgenommen wird, wenn die auf das gleitende Kabel ausgeübte Rückholkraft kleiner als ein vorgegebener Wert wird.

2. Mechanische Steuerung nach Anspruch 1, dadurch gekennzeichnet, daß die Hüllenansätze (43, 44) von zwei rohrförmigen Teilen gebildet werden, die teleskopierbar ineinander sitzen und zwischen denen das Verriegelungsorgan (62) aufgenommen wird.

3. Mechanische Steuerung nach Anspruch 2, dadurch gekennzeichnet, daß das Verriegelungsorgan (62) eine zylindrische Hülse (66) aufweist, die koaxial zu den Hüllenansätzen (43, 44) verläuft, wobei Kugeln (74) in Radialbohrungen (76) der Hülse (66) frei bewegbar gelagert sind, um bei einer Betätigung der mechanischen Steuerung mit an den Hüllenansätzen vorgesehenen Anlageflächen (67, 68) zusammenzuwirken.

4. Mechanische Steuerung nach Anspruch 3, dadurch gekennzeichnet, daß die Anlageflächen von einer zylindrischen Anlagefläche (68), die an einem der Hüllenansätze (43) gebildet ist, und einer konischen Anlagefläche (67), die an dem anderen Hüllenansatz (44) gegenüber der zylindrischen Anlagefläche vorgesehen ist, gebildet werden, wobei diese Anlageflächen (64, 67) zusammen eine Lagertasche (75) bilden, in der die Kugeln (74) aufgenommen sind.

5. Mechanische Steuerung nach einem der Ansprüche 1 bis 4, dadurch gekennzeichnet, daß das Steuerorgan von einer elastischen Zwinge gebildet wird, bestehend aus einem aus nachgiebigem Material hergestellten Körper (82) mit einer Bohrung (84), die das Kabel (10) gleitend aufnimmt, und einer Feder (86), die den Körper derart komprimiert, daß die Innenwand der Bohrung (84) mit der Außenfläche (11) des Kabels (10) in Anlage gehalten und auf diese Weise die besagte Reibschlußverbindung hergestellt wird.

6. Mechanische Steuerung nach einem der Ansprüche 1 bis 5, dadurch gekennzeichnet, daß die Ausgleichsvorrichtung (40) eine Ausgleichsfeder (54) aufweist, die zwischen den beiden aufeinanderfolgenden Abschnitten der Hülle (41, 42) angeordnet ist, um die letzteren voneinander weg, d. h. im Sinne einer Verlängerung der Hülle, vorzuspannen.

**Claims**

1. A mechanical control comprising a cable (10) axially sliding within a flexible sleeve (12) provided with an automatic regulating device (40) for varying the length of the sleeve in response to play occurring in the control, and having one extremity (28) connected to a receiver (30) provided with resilient return means (36), said regulating device comprising a pair of telescopic sleeve extensions (43, 44) inserted between a pair of consecutive portions (41, 42) of the sleeve to which they are fixed, characterized in that said device comprises a locking element (62) disposed between the two sleeve extensions (43, 44) to interlock the latter by clamping during an actuation of the mechanical control, and a control member (80) fixed to the locking member (62) and connected to the cable (10) by means of a friction connection (84, 11), said control member (80) during an actuation of the control being axially driven, in a translational manner by the cable (10) in a sense to clamp the locking elements for interlocking the sleeve extensions (43, 44), said control member being axially driven in a translational manner by the sliding cable in a sense to unlock the sleeve extensions when the return force applied to the sliding cable becomes smaller than a predetermined value.

2. The mechanical control of claim 1, characterized in that said sleeve extensions (43, 44) are comprised of a pair of tubular members telescopically received within each other and between which said locking member (62) is received.

3. The mechanical control of claim 2, characterized in that said locking device (62) comprises a cylindrical bushing (66) coaxial to said tubular sleeve extensions (43, 44) balls (74) being freely mounted in radial bores (76) formed in the bushing (66) for cooperating with abutment surfaces (67, 68) on said sleeve extensions during actuation of the mechanical control.

4. The mechanical control of claim 3, characterized in that said abutment surfaces comprise a cylindrical abutment surface (68) formed on one of said sleeve extensions (43) and a conical abutment surface (67) formed on the other of said sleeve extensions (44) opposite the cylindrical abutment surface, said surfaces (64, 68) cooperating to define a seat (75) for receiving said bolts (74).

5. The mechanical control of any of claims 1 to 4, characterized in that said control member is formed by a resilient clamp comprising a member (32) of flexible material provided with a bore (84) slidably receiving said cable (10), and a spring (86) compressing said member such as to maintain the inner wall of the bore (84) in contact with the external surface (11) of the cable (10) and thereby to define said friction connection.

6. The mechanical control of any of claims 1 to 5, characterized in that said regulating device (40) comprises a regulating spring (54) disposed between the two consecutive portions of the sleeve (41, 42) for biasing the latter apart from each other, i. e. in a direction corresponding to an extension of the sleeve.

FIG_1

FIG_2

FIG_3

FIG_4

FIG_5